# EUROPEAN PATENT APPLICATION

(11) **EP 2 226 109 A1**
(43) Date of publication of application: **08.09.2010**
(21) Application number: 09075096.9
(22) Date of filing: 04.03.2009
(51) Int. Cl.: B01D 45/16, B01D 51/06, B01D 53/00

(54) **Installation and procedure for sampling of fine particles**

(71) Applicant: Tetteroo, J.E.H., 2381 LG Zoeterwoude (NL)
(72) Inventor: Tetteroo, J.E.H., 2381 LG Zoeterwoude (NL)

(57) **Abstract**

**Summary**

The invention describes the system and operation for sampling fine dust from air as well as exhaust gas streams with a humidity between 5 and 100%.
The invention is also in respect on the sampling of dust particles with a convergent and divergent tube to accelerate and rotate a gaseous medium. Though this temperature declines and condensation of the moisture start. Under these conditions the diameter of the particles increases together with the rotation the dust is in a pendulum movement against the wall and separates from the gas stream. The gas stream is directed via one or more concentric tubes from the system. The separated particles are collected from the wall in a continuous flow for further analysis. The system only operates well with sufficient pressure drop.
In order to operate the system properly the ratio between inlet and outlet pressure must be 0,6. The walls must be smooth and properly designed.
With small systems it is necessary to thermally insulate the system.

## Description

The invention describes the system and operation for sampling fine dust from air as well as exhaust gas streams with a humidity between 5 and 100%. The invention is also in respect on the sampling of dust particles with a convergent and divergent tube to accelerate and rotate a gaseous medium. Though this temperature declines and condensation of the moisture start. Under these conditions the diameter of the particles increases together with the rotation the dust is in a pendulum movement against the wall and separates from the gas stream. The gas stream is directed via one or more concentric tubes from the system. The separated particles are collected from the wall in a continuous flow for further analysis. The system only operates well with sufficient pressure drop.
In order to operate the system properly the ratio between inlet and outlet pressure must be 0,6. The walls must be smooth and properly designed.
With small systems it is necessary to thermally insulate the system.

Under these conditions the diameter of the particles increases together with the rotation the dust is in a pendulum movement against the wall and separates from the gas stream. The gas stream is directed via one or more concentric tubes from the system. The separated particles are collected from the wall in a continuous flow for further analysis. The system only operates well with sufficient pressure drop.
In order to operate the system properly the ratio between inlet and outlet pressure must be 0,6. The walls must be smooth and properly designed.
With small systems it is necessary to thermally insulate the system.

Fine dust particles between 1 and 10.000 nanometre with a concentration up to 1.000.000 particles per ml gas. The small particles grow in size by over saturation with moisture before the are separated by the cyclone operation.

It is known that with this technique particles can be separated from natural gas. For this application called Supersonic Separator is patent grated to Twister B.V. at Rijswijk The

Netherlands under EP194790A1. EP1438540B1, EP1017465B1, EP1499419B1.

With human activity specially at the evocation of heat and power with fossil fuel at mobile and stationary installations dust is generated.
This fine dust is different from natural dust. To make a distinction between this fine dust it is necessary it is separated and analysed with a special technique for the measurement of Reactive Oxidative Stress (ROS) and Anti Oxidant depletion (AO).

It is known to separate fine dust from a gaseous medium by let the particle grow in size by means of moisture. Disadvantage with this technique is the extra amount of moisture that is added. By this technique the sample is diluted before analysis.

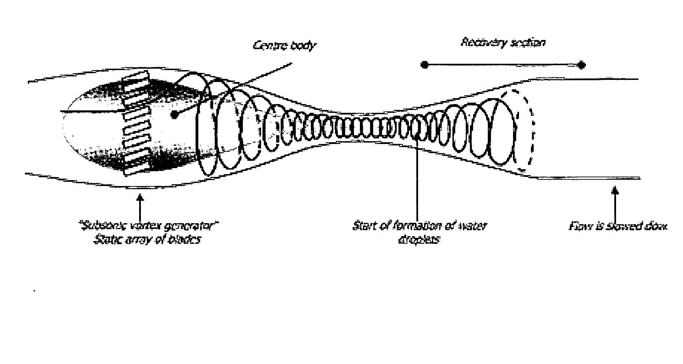

## Claims

1. The use of a system to collect fine dust particles from air and exhaust gas with a convergent and divergent tube to accelerate and rotate a gaseous medium. By this process the temperature degrease and condensation occurs. By this the fine particles can grow in size and will be separated.

2. The use of a system according 1 where by a separate extra inlet the bigger particles can be separated. Bigger than 1000, 2500 nanometre or bigger than 10.000 nanometre.
The invention describes the system and operation for sampling fine dust from air as well as exhaust gas streams with a humidity between 5 and 100%.

3. the use of a system according 2 to add extra moisture

4. the use of a system under 2 to add or subtract extra heat.

5. The use of a system under 3 with a measure to further over saturate with moisture.

6. The use of a system under 4 with extra procedure to separate fine dust and transport.
